(19) Europäisches Patentamt
European Patent Office
Office européen des brevets

(11) **EP 3 199 887 B1**

(12) **EUROPEAN PATENT SPECIFICATION**

(45) Date of publication and mention
of the grant of the patent:
**13.02.2019 Bulletin 2019/07**

(21) Application number: **14902518.1**

(22) Date of filing: **22.09.2014**

(51) Int Cl.:
*F25B 1/00* ^(2006.01)     *F25B 41/06* ^(2006.01)
*F25B 13/00* ^(2006.01)     *F25B 49/02* ^(2006.01)

(86) International application number:
**PCT/JP2014/075053**

(87) International publication number:
**WO 2016/046876 (31.03.2016 Gazette 2016/13)**

(54) **REFRIGERATION CYCLE DEVICE**

KÄLTEKREISLAUFVORRICHTUNG

DISPOSITIF À CYCLE DE RÉFRIGÉRATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.08.2017 Bulletin 2017/31**

(73) Proprietor: **Mitsubishi Electric Corporation
Chiyoda-ku
Tokyo 100-8310 (JP)**

(72) Inventors:
• **KATO, Yohei
Tokyo 100-8310 (JP)**

• **AOKI, Masanori
Tokyo 100-8310 (JP)**

(74) Representative: **Mewburn Ellis LLP
City Tower
40 Basinghall Street
London EC2V 5DE (GB)**

(56) References cited:
**EP-A2- 1 647 783         WO-A1-2009/004761
WO-A1-2014/102940    JP-A- 2004 003 717
JP-A- 2008 064 437      JP-A- 2010 002 109
US-A1- 2010 050 674    US-A1- 2012 167 604**

**Description**

Technical Field

The present invention relates to a refrigeration cycle apparatus configured to perform two-stage expansion.

Background Art

In a conventional refrigeration cycle apparatus, a circuit configuration in which two expansion valves are arranged in series with respect to a refrigerant circuit, and a liquid receiver is provided between the expansion valves to thereby allow high-pressure side liquid refrigerant to be expanded in two stages, has been known generally.
In such a refrigeration cycle apparatus, control is performed to adjust the opening degrees of the two expansion valves and to adjust the refrigerant temperature (degree of subcooling) at the outlet of the condenser (see Patent
Literature 1). EP 1 647 783 A2 discloses a refrigerating apparatus comprising a compressor, a first heat exchanger, a first expansion valve, a refrigerant container, a second heat exchanger connected in series, and a controller configured to control an opening degree of the first expansion valve and an opening degree of the second expansion valve, configured to compute a degree of subcooling of outlet refrigerant of the first heat exchanger, and configured to control the opening degree of the first expansion valve such that the degree of subcooling takes a target value.

Citation List

Patent Literature

Patent Literature 1: Japanese Unexamined Patent Application Publication No. 2008-64435

Summary of Invention

Technical Problem

In such a conventional refrigeration cycle apparatus, while the opening degree of an expansion valve is adjusted according to the degree of subcooling of the refrigerant at the outlet of the condenser, in the case where the performance of the heat exchanger is high relative to the heat amount to be processed (at the time of low load, for example), a high-pressure side pressure is less likely to be changed even when the upstream-side expansion valve is throttled. Under such a condition, when the resolution of the temperature sensor provided at the outlet of the condenser is coarse, the degree of subcooling cannot to be detected accurately. Accordingly, there is a problem that the degree of subcooling cannot be controlled appropriately.
The present invention has been made to solve such a problem. An object of the present invention is to provide a refrigeration cycle apparatus, configured to perform two-stage expansion, in which the degree of subcooling can be detected accurately even at the time of low load, and the opening degree of each expansion valve can be controlled appropriately.

Solution to Problem

A refrigeration cycle apparatus according to the present invention is set forth in claim 1. Advantageous Effects of Invention
According to the refrigeration cycle apparatus of an embodiment of the present invention, in the refrigeration cycle apparatus configured to perform two-stage
expansion, the opening degree of the upstream-side expansion valve is controlled based on the high-pressure side pressure value detected by the high-pressure side pressure detector and the middle-pressure side pressure value detected by the middle-pressure side pressure detector. Therefore, it is possible to accurately detect a degree of subcooling at the time of low load, and to control the opening degree of each expansion valve appropriately.

Brief Description of Drawings

Fig. 1 is a diagram illustrating a refrigeration cycle apparatus according to Embodiment 1.
Fig. 2 is a Mollier chart of the refrigeration cycle apparatus according to Embodiment 1.

Fig. 3 shows a flow of controlling an upstream-side expansion valve according to Embodiment 1.
Fig. 4 is a diagram illustrating a dead zone of the upstream-side expansion valve according to Embodiment 1.
Fig. 5 is a diagram illustrating an operation of the upstream-side expansion valve according to Embodiment 1.
Fig. 6 is a diagram illustrating a refrigeration cycle apparatus according to Embodiment 2.
Fig. 7 is a Mollier chart of the refrigeration cycle apparatus according to Embodiment 2.
Fig. 8 is a graph showing a relationship between a Cv value and an opening degree of an expansion valve according to Embodiment 3.
Fig. 9 is a graph of an experimental result showing a correlation between a point where the middle-pressure temperature in a refrigerant container varies with respect to a change in the opening degree of a downstream-side expansion valve and a point where COP is stabilized, in a refrigeration cycle apparatus according to Embodiment 4.

Description of Embodiments

Embodiments of the present invention will be described hereinafter with reference to the drawings. It should be noted that the present invention is not limited by the embodiments described below.

Embodiment 1.

<Configuration>

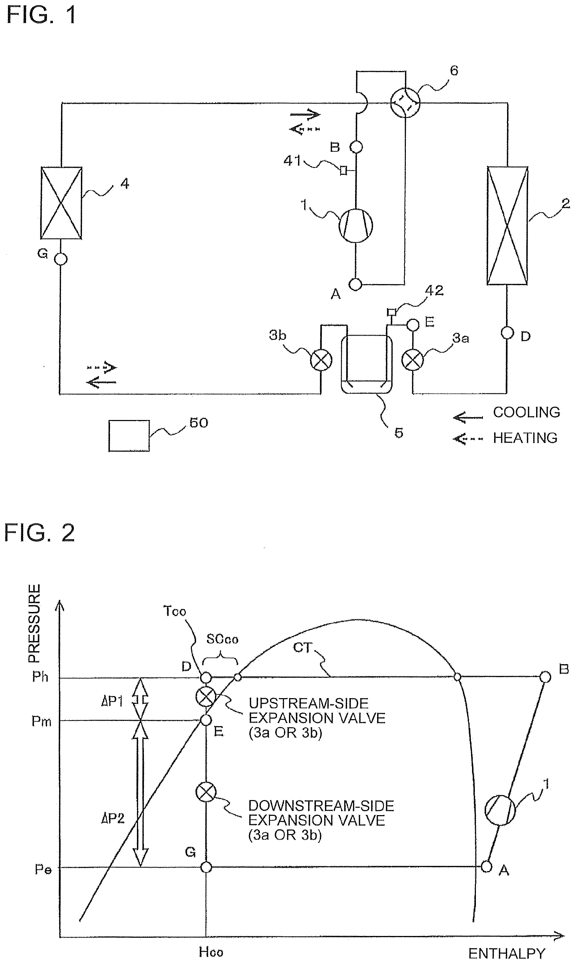

Fig. 1 is a configuration diagram illustrating a refrigeration cycle apparatus according to Embodiment 1.
Fig. 2 is a Mollier chart of the refrigeration cycle apparatus according to Embodiment 1.
As shown in Fig. 1, a refrigeration cycle apparatus of Embodiment 1 is configured such that a compressor 1, a first heat exchanger 2, a first expansion valve 3a, a second expansion valve 3b, a second heat exchanger 4, a refrigerant container 5, and a four-way valve 6 are connected with each other. The refrigerant container 5 is provided between the first expansion valve 3a and the second expansion valve 3b. Further, a high-pressure side pressure detector 41 that detects a high-pressure side pressure of the refrigerant flowing from the discharge side of the compressor 1 to the inlet of an upstream-side expansion valve that is one of the first expansion valve 3a and second expansion valve 3b, and a middle-pressure side pressure detector 42 that detects a pressure of the refrigerant flowing from the outlet of the upstream-side expansion valve that is one of the first expansion valve 3a and the second expansion valve 3b to the inlet of a downstream-side expansion valve, are also provided.
Further, a controller 50 is also provided. The controller 50 determines the opening degree of an upstream-side expansion valve from the high-pressure side pressure detected by the high-pressure side pressure detector 41 and the middle-pressure side pressure detected by middle-pressure side pressure detector 42, and controls the opening degree of the expansion valve.
Next, description will be given on state changes in the refrigerant on the Mollier chart while associating points A to G on Fig. 1 with the states (points A to G) of the refrigerant on Fig. 2.
Description will be given on the case where the first heat exchanger 2 is a condenser and the second heat exchanger 4 is an evaporator in the refrigerant circuit illustrated in Fig. 1.
In Fig. 2, the refrigerant sucked by the compressor 1 in a low-pressure gas refrigerant state (point A) is discharged from the compressor 1 to be in a high-pressure gas refrigerant state (point B). At this time, the high-pressure side pressure detected by the high-pressure side pressure detector 41 is a high-pressure side pressure Ph.
The gas refrigerant flowing in the first heat exchanger 2 (condenser) is condensed with the enthalpy being decreased to become high-pressure liquid refrigerant (point D) having a degree of subcooling (SC), and flows into the first expansion valve 3a. The refrigerant from the outlet of the condenser (point D) and decompressed by the first expansion valve 3a becomes saturated liquid and flows into the refrigerant container 5 (point E). At this time, the pressure inside the refrigerant container 5, measured by the middle-pressure side pressure detector 42, is a middle-pressure side pressure Pm. The refrigerant in the refrigerant container 5 is in a two-phase state including a liquid portion and a gas portion, that is, in a saturated state. Extra refrigerant caused depending on the operation state of the refrigeration cycle apparatus is stored in the refrigerant container 5.
The saturated liquid in the refrigerant container 5 is further decompressed by the second expansion valve 3b to be in a low-pressure two-phase gas-liquid state (point G), which is evaporated by the second heat exchanger 4 (evaporator) and is sucked by the compressor 1 again.
Next, an arithmetic method of calculating the degree of subcooling (SC) at the outlet of the condenser, from the high-pressure side pressure Ph detected by the high-pressure side pressure detector 41 and the middle-pressure side pressure Pm detected by the middle-pressure side pressure detector 42, will be described.
On the assumption that a state change from the point D to the point E in Fig. 2 is isenthalpic expansion, condenser outlet enthalpy Hco becomes equal to saturated liquid enthalpy Hm at an intersection between the middle-pressure side pressure Pm and the saturated liquid line in the Mollier chart, which can be computed from the expression provided below as a function of the middle-pressure side pressure Pm.

[Expression 1]

$$Hco=Hm=f(Pm) \ldots (1)$$

Next, the refrigerant temperature Tco at the condenser outlet can be computed from the function of the expression provided below, from an intersection between the high-pressure side pressure Ph of the condenser outlet on the Mollier chart and the condenser outlet enthalpy Hco.

[Expression 2]

$$Tco=f(Ph,Hco) \ldots (2)$$

Then, the degree of subcooling SCco of the condenser outlet can be obtained from the expression provided below by calculating saturation temperature CT of the condenser from the high-pressure side pressure Ph.

[Expression 3]

$$SCco=CT-Tco \ldots (3)$$

In this way, it is possible to compute the degree of subcooling SC of the condenser outlet from the high-pressure side pressure Ph and the middle-pressure side pressure Pm, without detecting the refrigerant temperature at the outlet of the condenser.

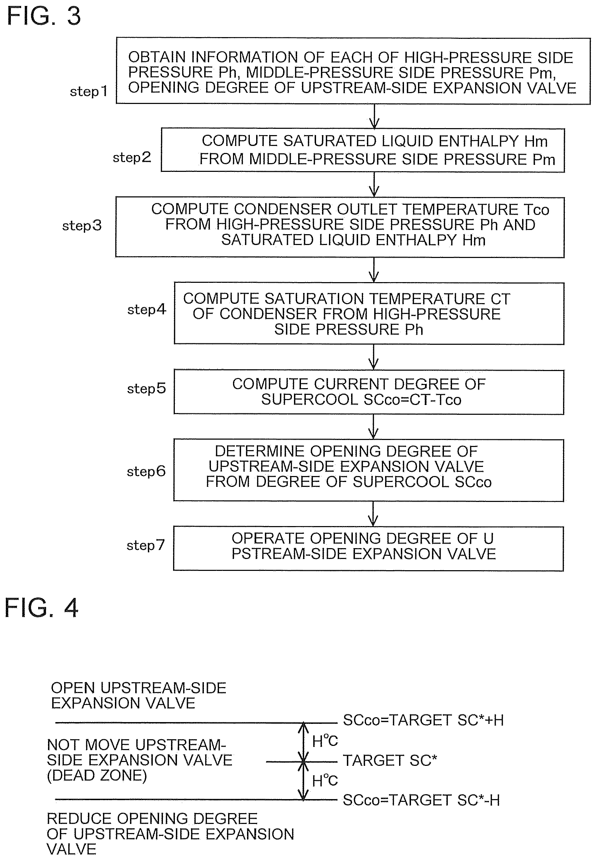

Next, operation of an upstream-side expansion valve that is one of the first expansion valve 3a and the second expansion valve 3b will be described with use of Figs. 3 to 5.

Fig. 3 shows a flow of controlling an upstream-side expansion valve according to Embodiment 1.

Fig. 4 is a diagram illustrating a dead zone of the upstream-side expansion valve according to Embodiment 1.

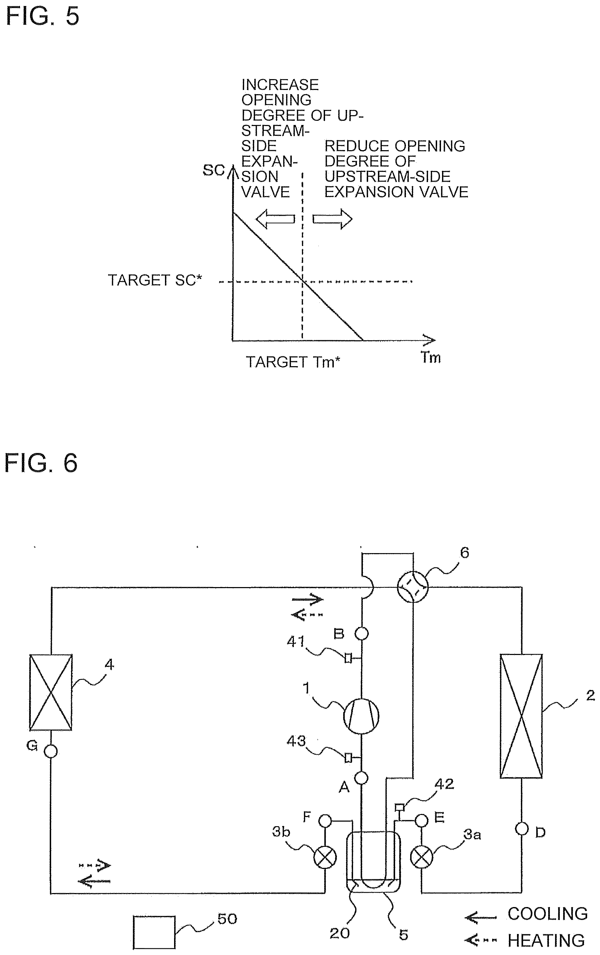

Fig. 5 is a diagram illustrating an operation of the upstream-side expansion valve according to Embodiment 1.

First, at step 1, the controller 50 acquires information of each of the high-pressure side pressure Ph detected by the high-pressure side pressure detector 41, the middle-pressure side pressure Pm detected by the middle-pressure side pressure detector 42, and the opening degree of the first expansion valve 3a. At this time, the pressure detectors may directly detect the high-pressure side pressure Ph and the middle-pressure side pressure Pm, or detect the saturation temperature of the corresponding part and convert it to the saturation pressure of the refrigerant to thereby detect the pressure indirectly.

Next, at step 2, saturated liquid enthalpy Hm is computed from the middle-pressure side pressure Pm by physicality approximation on the Mollier chart. As described above, the saturated liquid enthalpy Hm becomes equal to the condenser outlet enthalpy Hco.

At step 3, the refrigerant temperature Tco at the condenser outlet is computed by physicality approximation from the intersection between the condenser outlet enthalpy Hco and the high-pressure side pressure Ph.

At step 4, the saturation temperature CT of the condenser is computed from the high-pressure side pressure Ph.

At step 5, the current degree of subcooling SCco at the condenser outlet is computed by computing CT-Tco.

Next, at step 6, the opening degree of an upstream-side expansion valve, namely the first expansion valve 3a, for example, is determined.

With respect to the current expansion valve opening degree LP(i), the next expansion valve opening degree LP(i+1) is computed from the expression provided below using the current degree of subcooling SCco and a target degree of subcooling SC*.

[Expression 4]

$$LP(i+1)=LP(i)+\Delta LP(i) \ldots (4)$$

[Expression 5]

$$\Delta LP(i)=\alpha \times (SCco-SC^{*})+\beta \ldots (5)$$

where α represents a proportionality coefficient, and β represents a correction coefficient according to an operation state of the cycle.

In this way, the next opening degree of the first expansion valve 3a is determined to approach the target degree of subcooling SC*, then the operation proceeds to step 7, and operation of the opening degree is performed.

It should be noted that as shown in Fig. 4, it is possible to control the first expansion valve 3a such that the first expansion valve 3a does not move excessively by setting a dead zone (a range in which the first expansion valve 3a is not moved) having a width of a predetermined temperature H [degrees C] above and below the target degree of subcooling SC*, and operating the upstream-side expansion valve, namely the first expansion valve 3a, for example, when the current degree of subcooling SCco exceeds the dead zone.

Further, in the embodiment described above, the expansion valve opening degree LP(i) is controlled to allow the current degree of subcooling SCco to approach the target degree of subcooling SC*. However, as shown in Fig. 5, it is also possible to compute the target middle-pressure temperature Tm* from the target SC* and the current high-pressure side pressure Ph, and control the expansion valve opening degree LP(i) such that the current middle-pressure temperature Tm becomes the target middle-pressure temperature Tm*.

<Effect>

According to the refrigeration cycle apparatus of Embodiment 1, the degree of subcooling of the refrigerant is not detected by the temperature detector provided at the condenser outlet. As such, it is possible to appropriately detect the degree of subcooling at the condenser outlet under a condition that the degree of subcooling is less likely to be changed at the time of low load because of the characteristics of the refrigeration cycle apparatus, and control the refrigeration cycle apparatus by adjusting the opening degree of the expansion valve.

Accordingly, in the refrigeration cycle apparatus in which two-stage expansion is performed, the degree of subcooling can be detected accurately even at the time of low load, and the opening degree of each expansion valve can be controlled appropriately.

Further, in a refrigerant circuit in which cooling and heating are switchable, a temperature detector at the condenser outlet, which has been required for each of the heat source side heat exchanger and the load side heat exchanger conventionally, is no longer required.

Embodiment 2.

<Configuration>

Fig. 6 is a configuration diagram illustrating a refrigeration cycle apparatus according to Embodiment 2.

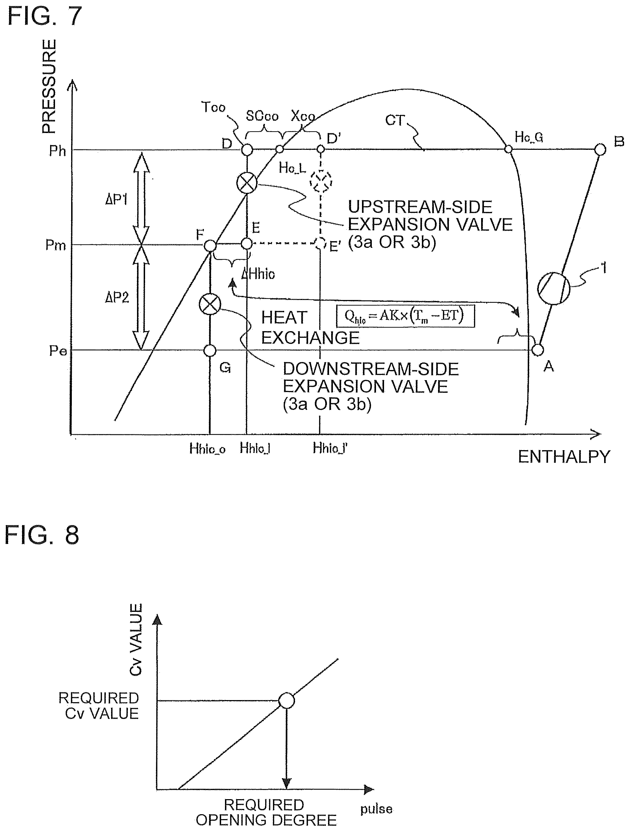

Fig. 7 is a Mollier chart of the refrigeration cycle apparatus according to Embodiment 2.

The refrigeration cycle apparatus of Embodiment 2 is configured as illustrated in Fig. 6. Description will be given only on a difference from the refrigeration cycle apparatus of Embodiment 1.

The refrigeration cycle apparatus of Embodiment 2 includes a refrigerant heat exchanger 20 that allows heat exchange between low-pressure refrigerant sucked by the compressor 1 and middle-pressure refrigerant flowing between the first expansion valve 3a and the second expansion valve 3b.

As a heat transfer pipe used for the refrigerant heat exchanger 20, a typical circular pipe, or a circular pipe in which the surface thereof is processed to have protrusions or the like such that the heat transfer area and a heat transfer coefficient are improved, may be used. Alternatively, a flat heat transfer pipe having a large surface area may be used.

Heat transfer pipes may be arranged to be stacked in a circumferential direction or in a vertical direction of the refrigerant container 5.

Further, the refrigeration cycle apparatus also includes a low-pressure side pressure detector 43 that detects a pressure of the refrigerant from the outlet of a downstream-side expansion valve that is one of the first expansion valve 3a and second expansion valve 3b to the suction side of the compressor 1.

Further, the refrigeration cycle apparatus also includes a controller 50 that determines the opening degree of an upstream-side expansion valve from the high-pressure side pressure Ph detected by the high-pressure side pressure detector 41, the middle-pressure side pressure Pm detected by the middle-pressure side pressure detector 42, and a low-pressure side pressure Pe detected by the low-pressure side pressure detector 43, and controls each expansion valve. At this time, the respective pressure detectors may directly detect the high-pressure side pressure Ph, the middle-pressure side pressure Pm, and the low-pressure side pressure Pe, or detect saturation temperature of the corresponding part and convert it to the saturation pressure of the refrigerant to thereby detect the pressure indirectly.

Next, description will be given on state changes in the refrigerant on the Mollier chart while associating points A to G on Fig. 6 with the states (points A to G) of the refrigerant on Fig. 7.

Description will be given on the case where the first heat exchanger 2 is a condenser and the second heat exchanger 4 is an evaporator in the refrigerant circuit illustrated in Fig. 6.

In Fig. 7, the refrigerant sucked by the compressor 1 in a low-pressure gas refrigerant state (point A) is discharged from the compressor 1 to be in a high-pressure gas refrigerant state (point B). At this time, the high-pressure side pressure detected by the high-pressure side pressure detector 41 is a high-pressure side pressure Ph.

The gas refrigerant flowing in the first heat exchanger 2 (condenser) is condensed with the enthalpy being decreased to become high-pressure liquid refrigerant (point D) having a degree of subcooling (SC), and flows into the first expansion valve 3a. The refrigerant flowing from the outlet of the condenser (point D) and decompressed by the first expansion valve 3a becomes two-phase gas-liquid refrigerant and flows into the refrigerant container 5 (point E). The two-phase gas-liquid refrigerant in the refrigerant container 5 is cooled by the refrigerant heat exchanger 20 in which refrigerant having a low-pressure side pressure flows, to become saturated liquid (point F). At this time, the pressure inside the refrigerant container 5, measured by the middle-pressure side pressure detector 42, is a middle-pressure side pressure Pm.

The refrigerant in the refrigerant container 5 is in a two-phase state including a liquid portion and a gas portion, that is, in a saturated state. Extra refrigerant caused depending on the operation state of the refrigeration cycle apparatus is stored in the refrigerant container 5.

The saturated liquid in the refrigerant container 5 is further decompressed by the second expansion valve 3b to be in a low-pressure two-phase gas-liquid state (point G), which is evaporated by the second heat exchanger 4 (evaporator) and is sucked by the compressor 1 again.

Next, an arithmetic method of calculating the degree of subcooling (SC) at the condenser outlet, from the high-pressure side pressure Ph detected by the high-pressure side pressure detector 41, the middle-pressure side pressure Pm detected by the middle-pressure side pressure detector 42, and suction saturation temperature ET computed from the low-pressure side pressure Pe detected by the low-pressure side pressure detector 43, will be described.

First, the amount of heat exchange in the refrigerant heat exchanger 20 is represented by the expression provided below using the middle-pressure temperature Tm with respect to the middle-pressure side pressure Pm, the suction saturation temperature ET with respect to the low-pressure side pressure Pe, and an AK value (product of an overall heat transfer coefficient K [W/m²·K] and a heat transfer area A [m²]) representing the heat exchange performance of the refrigerant heat exchanger 20.

[Expression 6]

$$Q_{hic} = AK \times (T_m - ET) \ ... \ (6)$$

Next, an enthalpy difference ΔHhic when heat exchange is performed in the refrigerant heat exchanger 20 is shown by the expression provided below using the refrigerant flow rate Gr of the refrigerant discharged from the compressor 1.

[Expression 7]

$$\Delta H_{hic} = \frac{Q_{hic}}{Gr} \quad ... \ (7)$$

Here, the refrigerant flow rate Gr is expressed by the expression provided below using the stroke volume Vst [cc] of the compressor 1 Vst [cc], frequency Fcomp [Hz], suction density ps [kg/m³], and volumetric efficiency ηv.

[Expression 8]

$$Gr = Vst \times 10^{-6} \times F_{comp} \times \rho_s \times \eta_v \ ... \ (8)$$

As the outlet refrigerant of the refrigerant container 5 is saturated liquid refrigerant (point F), enthalpy Hhic_i of the inlet refrigerant (point E) of the refrigerant container 5 can be computed from the expression provided below.

[Expression 9]

$$H_{hic\_i} = H_{hic\_o} + \Delta H_{hic} \ ... \ (9)$$

On the assumption that the enthalpy Hhic_i of the inlet refrigerant of the refrigerant container 5 and the enthalpy Hco of the condenser outlet refrigerant take the same value, the refrigerant temperature Tco of the condenser outlet can be obtained from the intersection between the high-pressure side pressure Ph and the enthalpy Hco of the outlet refrigerant of the condenser as described in Embodiment 1, whereby the degree of subcooling SCco can be computed.

Further, as Embodiment 2 includes the refrigerant heat exchanger 20, there is case where the refrigerant at the condenser outlet is in a two-phase state (broken line states D' → E' → F in Fig. 7) under a condition that the quality of the refrigerant at the outlet and the quality thereof at the inlet of the refrigerant container 5 differ (two-phase state at the inlet and saturated liquid at the outlet). However, the upstream-side expansion valve can be controlled by estimating the quality Xco of the refrigerant at the condenser outlet as described below.

The quality Xco of the refrigerant at the condenser outlet is expressed by the expression provided below.
[Expression 10]

$$X_{co} = \frac{H_{hic\_i} - H_{c\_L}}{H_{c\_G} - H_{c\_L}} \quad \dots (10)$$

$H_{c\_G}$: enthalpy of high-pressure side saturated gas
$H_{c\_L}$: enthalpy of high-pressure side saturated liquid

As described above, by calculating the quality Xco or the degree of subcooling SCco of the refrigerant at the condenser outlet by computation, it is possible to determine and operate the opening degree of, for example, the first expansion valve 3a on the upstream side such that the target quality Xco or the target degree of subcooling SCco is achieved, similar to step 6 of the control flow in Embodiment 1.

In the case where the current quality Xco of the condenser outlet refrigerant is used as a reference at step 6 in the control flow of Embodiment 1, the next operation amount ΔLP(i) is determined by the expression provided below using a difference from the target quality X* and the next opening degree is determined, and the operation proceeds to step 7 to operate the opening degree of, for example, the first expansion valve 3a on the upstream side.
[Expression 11]

$$\Delta LP(i) = \alpha \times (Xco - X^*) + \beta \dots (11)$$

Here, similar to the case of Embodiment 1, α represents a proportionality coefficient, and β represents a correction coefficient according to the operation state of the cycle.

<Effects>

According to the refrigeration cycle apparatus of Embodiment 2, the degree of subcooling of the refrigerant is not detected by the temperature detector provided at the condenser outlet, similar to the case of Embodiment 1. As such, it is possible to appropriately detect the degree of subcooling at the condenser outlet under a condition that the degree of subcooling is less likely to be changed at the time of low load because of the characteristics of the refrigeration cycle apparatus, and control the refrigeration cycle apparatus by adjusting the opening degree of the expansion valve.

Accordingly, in the refrigeration cycle apparatus in which two-stage expansion is performed, the degree of subcooling can be detected accurately even at the time of low load, and the opening degree of each expansion valve can be controlled appropriately.

Further, in a refrigerant circuit in which cooling and heating are switchable, a temperature detector at the condenser outlet, which has been required for each of the heat source side heat exchanger and the load side heat exchanger conventionally, is no longer required.

In Embodiment 1, the refrigerant at both the outlet and the inlet of the refrigerant container 5 is saturated liquid. As such, when the outlet refrigerant of the condenser is in a two-phase state, the state of refrigerant cannot be estimated.

Meanwhile, in Embodiment 2, as the refrigerant heat exchanger 20 is provided, while the refrigerant at the condenser outlet may be in a two-phase state (broken-line state in Fig. 7) under a condition that the quality of the refrigerant at the outlet and the quality thereof at the inlet of the refrigerant container 5 differ (two-phase state at the inlet and saturated liquid at the outlet), it is possible to control the expansion valve by estimating the refrigerant state (quality Xco) at the condenser outlet.

Particularly, when the upper limit of the amount of sealed refrigerant is determined such as the case of flammable refrigerant or slightly flammable refrigerant, the amount of sealed refrigerant is smaller than that of the conventional refrigerant and a condition in which the outlet refrigerant of the condenser does not become subcooled liquid is likely to be caused. However, with the refrigeration cycle apparatus of Embodiment 2, the opening degree of the expansion valve can be controlled appropriately.

Embodiment 3.

<Configuration>

The configuration of a refrigeration cycle apparatus according to Embodiment 3 is similar to the configurations of Embodiments 1 and 2 (see Figs. 1 and 6).

The refrigeration cycle apparatus of Embodiment 3 is characterized in controlling the opening degree of a downstream-side expansion valve in two-stage expansion. As such, description will be given mainly on this point.

According to the operation method provided below, the opening degree of a downstream-side expansion valve is determined to be linked to the opening degree of an upstream-side expansion valve that is one of the first expansion valve 3a and the second expansion valve 3b.

The opening degree of the upstream-side expansion valve is controlled based on the degree of subcooling (SCco) or the quality (Xco) of the refrigerant at the condenser outlet similar to the cases of Embodiments 1 and 2.

Generally, a correlation expressed in the expression provided below exists in the refrigerant flow rate Gr of the refrigerant passing through an expansion valve, a resistance coefficient Cv of the expansion valve, a pressure difference $\Delta P$ between before and after the expansion valve and the refrigerant liquid density $\rho$.

[Expression 12]

$$Gr \propto Cv \times (\Delta P \times \rho)^{0.5} \dots (12)$$

$\propto$: proportional relation

On the assumption that the refrigerant flow rate Gr does not vary after the opening degree of the expansion valve is changed due to control of the quality (Xco) or the degree of subcooling (SCco) of the refrigerant at the condenser outlet, Cv values before and after the opening degree is changed (before the change Cv1, after the change Cv1*) and the pressure difference $\Delta P$ has a relation expressed by the expression provided below.

[Expression 13]

$$Cv_1 \times (\Delta P_1 \times \rho_1)^{0.5} = Cv_1^* \times (\Delta P_1^* \times \rho_1^*)^{0.5} \dots (13)$$

Here, $\Delta P1$ is computed from a difference between the high-pressure side pressure Ph and the middle-pressure side pressure Pm ($\Delta P1 = Ph - Pm$).

As a change in the liquid density of the refrigerant is ignorable, by deforming Expression 13, a pressure difference $\Delta P1^*$ after the opening degree of the expansion valve is changed is computed from the expression provided below.

[Expression 14]

$$\frac{Cv_1}{Cv_1^*} = \left( \frac{\Delta P_1^*}{\Delta P_1} \right)^{0.5} \times \left( \frac{\rho_1^*}{\rho_1} \right)^{0.5}$$

$$\Longrightarrow \quad \Delta P_1^* = \left( \frac{Cv_1}{Cv_1^*} \right)^2 \times \Delta P_1 \qquad \dots (14)$$

On the assumption that the evaporating temperature = low-pressure side pressure Pe does not change after the opening degree of the upstream-side expansion valve is changed, the middle-pressure side pressure Pm* after the opening degree of the upstream-side expansion valve is changed can be obtained with use of $\Delta P1^*$ computed from Expression 14 (Pm* = Ph - $\Delta P1^*$).

Then, it is possible to compute a pressure difference $\Delta P2^*$ between before and after in the downstream-side expansion valve after the opening degree of the upstream-side expansion valve is changed.

[Expression 15]

$$\Delta P_2{}^* = P_m{}^* - P_e \dots (15)$$

With use of the pressure difference $\Delta P_2^*$ between before and after in the downstream-side expansion valve, after the opening degree of the upstream-side expansion valve is changed, computed from the above expression, the current pressure difference $\Delta P_2$, and the current resistance coefficient Cv2, a Cv value (Cv2* after the opening degree is changed) of the downstream-side expansion valve is computed from the expression provided below.
[Expression 16]

$$\frac{Cv_2}{Cv_2{}^*} = \left( \frac{\Delta P_2{}^*}{\Delta P_2} \right)^{0.5} \times \left( \frac{\rho_2{}^*}{\rho_2} \right)^{0.5}$$

$$\Longrightarrow \quad Cv_2{}^* = \left( \frac{\Delta P_2}{\Delta P_2{}^*} \right)^{0.5} \times Cv_2 \qquad \dots (16)$$

Fig. 8 is a graph showing a relation between the Cv value and the opening degree of an expansion valve according to Embodiment 3.
The opening degree of an expansion valve and a resistance coefficient Cv value has a relation shown in Fig. 8. When a Cv value is determined, the opening degree of an expansion valve can also be determined.
Accordingly, it is possible to determine the opening degree of the downstream-side expansion valve from the Cv value of Cv2*.

<Effect>

As the opening degree of the downstream-side expansion valve is appropriately determined and controlled as described above, in addition to the effects of Embodiments 1 and 2, the refrigeration cycle can be maintained in a normal state even when the opening degree of the upstream-side expansion valve is changed so that the middle-pressure side pressure Pm varies. Then, by controlling the downstream-side expansion valve according to the opening degree of the upstream-side expansion valve, only one control parameter is used, so that it is possible to improve the stability of control of the refrigeration cycle.

Embodiment 4.

<Configuration>

The configuration of a refrigeration cycle apparatus according to Embodiment 4 is similar to the configurations of Embodiments 1 and 2 (see Figs. 1 and 6).
Further, the refrigeration cycle apparatus of Embodiment 4 is characterized in controlling the opening degree of a downstream-side expansion valve in two-stage expansion. As such, description will be given mainly on this point.
According to the operation method provided below, the opening degree of a downstream-side expansion valve is determined to be linked to the opening degree of an upstream-side expansion valve that is one of the first expansion valve 3a and the second expansion valve 3b.
The opening degree of the upstream-side expansion valve is controlled based on the degree of subcooling (SCco) or the quality (Xco) of the refrigerant at the condenser outlet, similar to the cases of Embodiments 1 and 2.
In the refrigeration cycle apparatus of Embodiments 1 and 2, a test result of circuit characteristics in the case of controlling the upstream-side expansion valve such that the degree of subcooling (SC) becomes constant and changing the opening degree of the downstream-side expansion valve, in a cooling intermediate period in which the load is low, will be described below.

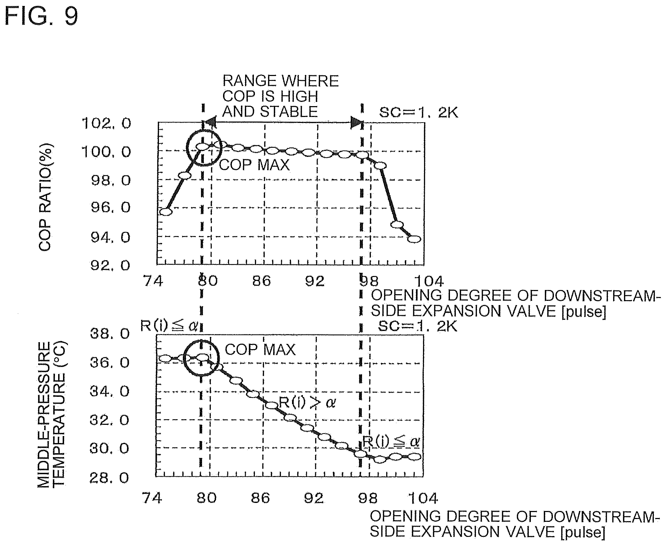

Fig. 9 is a graph of an experimental result showing a correlation between a point where the middle-pressure temperature Tm inside the refrigerant container varies with respect to a change in the opening degree of the downstream-side expansion valve and a point where the coefficient of performance (hereinafter referred to as COP) is stabilized, in the refrigeration cycle apparatus of Embodiment 4.
As shown in Fig. 9, in the case where the opening degree of an upstream-side expansion valve that is one of the first expansion valve 3a and the second expansion valve 3b is adjusted and the degree of subcooling (SC) of refrigerant at the condenser outlet is stabilized at 1.2K, for example, when the opening degree of the downstream-side expansion valve is within a predetermined range, there is a range where the COP of the refrigeration cycle apparatus is high and stability of the COP is high (COP variation is within 1 %). Further, there is a correlation between the point where the middle-pressure temperature Tm inside the refrigerant container 5 varies with respect to a change of the opening degree of the downstream-side expansion valve and the point where the COP is stabilized.

This means that in the experimental result shown in Fig. 9, it is found that in a range where the opening degree of the downstream-side expansion valve is between 79 pulses and 97 pulses, the COP is high and a stable value is shown, and that in this range, the value of the middle-pressure temperature Tm has a tendency that it drops significantly with respect to an increase in the opening degree of the downstream-side expansion valve. Further, the maximum value of the COP is at a position where the opening degree of the downstream-side expansion valve is near 80 pulses and is near the point where the middle-pressure temperature Tm increases when the opening degree of the downstream-side expansion valve is throttled and the gradient is eliminated.

By controlling the downstream-side expansion valve after stabilizing the degree of subcooling SC by controlling the upstream-side expansion valve with use of such characteristics, it is possible to search for a range where the COP is high or a point where the COP becomes the maximum to thereby improve the operation efficiency of the refrigeration cycle apparatus.

Hereinafter, a search for the range where the COP is high and stable will be described.

First, during a cooling intermediate period when the load is low, for example, the downstream-side expansion valve is driven from an opening state to a throttling direction in a state where the upstream-side expansion valve is controlled to make the degree of subcooling (SC) constant.

Next, when $Tm(i)$ represents middle-pressure temperature and $LP(i)$ represents an opening degree of the downstream-side expansion valve at a point during driving of the downstream-side expansion valve, a change amount $\Delta Tm(i)$ of $Tm(i)$ with respect to an operation amount $\Delta LP(i)$ of $LP(i)$ is computed as an inclination $R(i)$ according to the expression provided below.

[Expression 17]

$$R(i)=\Delta Tm(i)/\Delta LP(i) ... (17)$$

Here, when the inclination $R(i) > \alpha$ ($\alpha$ is a given amount, e.g., $\alpha = 0.3$), it is determined from the correlation of Fig. 9 that it is in a range where the COP of the refrigeration cycle apparatus is high and the stability of the COP is also high, so that the opening degree $LP(i)$ of the downstream-side expansion valve is maintained.

On the other hand, when the inclination $R(i) \leq \alpha$ ($\alpha$ is a given amount, e.g., $\alpha = 0.3$), it is determined from the correlation of Fig. 9 that it is deviating from the range where the COP of the refrigeration cycle apparatus is high and is in a range where stability of the COP is low, so that control to throttle the opening degree $LP(i)$ of the downstream-side expansion valve is performed until the inclination $R(i) > \alpha$ is satisfied.

Further, while the downstream-side expansion valve is driven from an opening state to a throttling direction in the example described above, it is also possible to open it from a throttled state on the contrary, and when it satisfies the condition of the inclination $R(i) > \alpha$, determine that it is in a range where the COP of the refrigeration cycle apparatus is high and the stability of COP is also high.

<Effects>

By controlling the downstream-side expansion valve as described above, in addition to the effects of Embodiments 1 and 2, it is possible to search for a range where the COP of the refrigeration cycle apparatus is high and the stability of the COP is high from the correlation between the point where the middle-pressure temperature within the refrigerant container with respect to a change in the opening degree of the downstream-side expansion valve and the point where the COP is stabilized, and to improve the efficiency of the refrigeration cycle apparatus.

Further, in the case of driving the refrigeration cycle apparatus near the maximum value of the COP, the downstream-side expansion valve is driven from an opening state to the throttling direction, and when the inclination $R(i) > \alpha$ ($\alpha$ is a given amount, e.g., $\alpha = 0.3$), the control to throttle the opening degree $LP(i)$ of the downstream-side expansion valve is continued. Then, when the inclination $R(i) \leq \alpha$ is satisfied, the opening degree $LP(i)$ of the downstream-side expansion valve is fixed.

By controlling the opening degree of the expansion valve as described above, it is possible to determine the intersection between an almost linear portion where the inclination $R(i) > \alpha$ is satisfied and an almost linear portion where the inclination $R(i) \leq \alpha$ is satisfied in Fig. 9. As the intersection corresponds to the maximum value of the COP, by fixing the opening degree $LP(i)$ of the downstream-side expansion valve at this point, it is possible to operate the refrigeration cycle apparatus near the maximum COP.

Reference Signs List

1 compressor 2 first heat exchanger 3a first expansion valve 3b second expansion valve 4 second heat exchanger 5 refrigerant container 6 four-way valve 20 refrigerant heat exchanger 41 high-pressure side pressure detector 42 middle-pressure side pressure detector 43 low-pressure side pressure detector 50 controller Pe low-pressure side Ph high-pressure side Pm middle-pressure side SC degree of subcooling.

**Claims**

1. A refrigeration cycle apparatus comprising:

       a compressor (1);
       a first heat exchanger (2);
       a first expansion valve (3a);
       a refrigerant container (5);
       a second expansion valve (3b);
       a second heat exchanger (4) connected in series,
       a high-pressure side pressure detector (41) configured to detect a pressure of refrigerant between a discharge side of the compressor (1) and the first expansion valve (3a);
       a middle-pressure side pressure detector (42) configured to detect a pressure of refrigerant between the first expansion valve (3a) and the second expansion valve (3b); and
       a controller (50) configured to control an opening degree of the first expansion valve (3a) and an opening degree of the second expansion valve (3b),

       the controller (50) being configured to compute a degree of subcooling of outlet refrigerant of the first heat exchanger (2), based on a high-pressure side pressure value detected by the high-pressure side pressure detector (41) and a middle-pressure side pressure value detected by the middle-pressure side pressure detector (42), and control the opening degree of the first expansion valve (3a) such that the degree of subcooling takes a target value, and control the opening degree of the second expansion valve (3b) based on a pressure difference of the refrigerant passing through the first expansion valve (3a).

2. The refrigeration cycle apparatus of claim 1, further comprising:

       a refrigerant heat exchanger (20) configured to allow heat exchange between middle-pressure refrigerant between the first expansion valve (3a) and the second expansion valve (3b), and low-pressure refrigerant between the second expansion valve (3b) and a suction side of the compressor (1); and
       a low-pressure side pressure detector (43) configured to detect a pressure of the low-pressure refrigerant, wherein

       the controller (50) is configured to control the opening degree of the first expansion valve (3a) by using the high-pressure side pressure value, the middle-pressure side pressure value, and a low-pressure side pressure value detected by the low-pressure side pressure detector (43).

3. The refrigeration cycle apparatus of claim 2, wherein
   the controller (50) is configured to compute a degree of subcooling of outlet refrigerant of the first heat exchanger (2) based on the high-pressure side pressure value, the middle-pressure side pressure value, and the low-pressure side pressure value, and control the opening degree of the first expansion valve (3a) such that the degree of subcooling takes a target value.

4. The refrigeration cycle apparatus of claim 2, wherein
   the controller (50) is configured to compute quality of outlet refrigerant of the first heat exchanger (2) based on the high-pressure side pressure value, the middle-pressure side pressure value, and the low-pressure side pressure value, and control the opening degree of the first expansion valve (3a) such that the quality takes a target value.

5. The refrigeration cycle apparatus of any one of claims 1 to 4, wherein

**EP 3 199 887 B1**

the controller (50) is configured to control the second expansion valve (3b) to have an opening degree corresponding to the middle-pressure side pressure value at which a coefficient of performance (COP) is maximum.

**Patentansprüche**

1. Kältekreislaufvorrichtung, die Folgendes umfasst:

   einen Kompressor (1);
   einen ersten Wärmetauscher (2);
   ein erstes Expansionsventil (3a);
   einen Kältemittelbehälter (5);
   einen in Serie geschalteten zweiten Wärmetauscher (4),
   einen Hochdruckseitendruckdetektor (41), der zur Detektion eines Kältemitteldrucks zwischen einer Austrittsseite des Kompressors (1) und dem ersten Expansionsventil (3a) konfiguriert ist;
   einen Mitteldruckseitendruckdetektor (42), der zur Detektion eines Kältemitteldrucks zwischen dem ersten Expansionsventil (3a) und dem zweiten Expansionsventil (3b) konfiguriert ist; und
   eine Steuerung (50), die konfiguriert ist, um einen Öffnungsgrad des ersten Expansionsventils (3a) und einen Öffnungsgrad des zweiten Expansionsventils (3b) zu steuern,

   wobei die Steuerung (50) konfiguriert ist, um einen Unterkühlungsgrad von Austrittskältemittel des ersten Wärmetauschers (2) auf Basis eines vom Hochdruckseitendruckdetektor (41) detektierten Hochdruckseitendruckwerts und eines vom Mitteldruckseitendruckdetektor (42) detektierten Mitteldruckseitendruckwerts zu berechnen und den Öffnungsgrad des ersten Expansionsventils (3a) zu steuern, sodass der Unterkühlungsgrad einen Zielwert annimmt, und den Öffnungsgrad des zweiten Expansionsventils (3b) auf Basis einer Druckmitteldifferenz des durch das erste Expansionsventil (3a) strömenden Kältemittels zu steuern.

2. Kältekreislaufvorrichtung nach Anspruch 1, die ferner Folgendes umfasst:

   einen Kältemittelwärmetauscher (20), der konfiguriert ist, um einen Wärmeaustausch zwischen Mitteldruckkältemittel zwischen dem ersten Expansionsventil (3a) und dem zweiten Expansionsventil (3b) und Niederdruckkältemittel zwischen dem zweiten Expansionsventil (3b) und einer Saugseite des Kompressors (1) zu ermöglichen; und
   einen Niederdruckseitendruckdetektor (43), der zur Detektion eines Drucks des Niederdruckkältemittels konfiguriert ist, wobei

   die Steuerung (5) konfiguriert ist, um den Öffnungsgrad des ersten Expansionsventils (3a) unter Verwendung des Hochdruckseitendruckventils, des Mitteldruckseitendruckventils und eines vom Niederdruckseitendruckdetektor (43) detektierten Niederdruckseitendruckwerts zu steuern.

3. Kältekreislaufvorrichtung nach Anspruch 2, wobei die Steuerung (50) konfiguriert ist, um einen Unterkühlungsgrad von Austrittskältemittel des ersten Wärmetauschers (2) auf Basis des Hochdruckseitendruckwerts, des Mitteldruckseitendruckwerts und des Niederdruckseitendruckwerts zu berechnen und den Öffnungsgrad des ersten Expansionsventils (3a) zu steuern, sodass der Unterkühlungsgrad einen Zielwert annimmt.

4. Kältekreislaufvorrichtung nach Anspruch 2, wobei die Steuerung (50) konfiguriert ist, um die Qualität des Austrittskältemittels des ersten Wärmetauschers (2) auf Basis des Hochdruckseitenwerts, des Mitteldruckseitendruckwerts und des Niederdruckseitendruckwerts zu berechnen und den Öffnungsgrad des ersten Expansionsventils (3a) zu steuern, sodass die Qualität einen Zielwert annimmt.

5. Kältekreislaufvorrichtung nach einem der Ansprüche 1 bis 4, wobei die Steuerung (50) konfiguriert ist, um das zweite Expansionsventil (3b) so zu steuern, dass es einen Öffnungsgrad aufweist, der dem Mitteldruckseitendruckwert entspricht, bei dem eine Leistungszahl (COP) ein Maximum ist.

**Revendications**

1. Dispositif à cycle de réfrigération comprenant :

un compresseur (1) ;
un premier échangeur de chaleur (2) ;
un premier détendeur (3a) ;
un récipient de réfrigérant (5) ;
un second détendeur (3b) ;
un second échangeur de chaleur (4) raccordé en série,
un détecteur de pression du côté de la haute pression (41) configuré pour détecter une pression du réfrigérant entre un côté de décharge du compresseur (1) et le premier détendeur (3a) ;
un détecteur de pression du côté de la moyenne pression (42) configuré pour détecter une pression de réfrigérant entre le premier détendeur (3a) et le second détendeur (3b) ; et
un organe de commande (50) configuré pour commander un degré d'ouverture du premier détendeur (3a) et un degré d'ouverture du second détendeur (3b),

l'organe de commande (50) étant configuré pour calculer un degré de sous-refroidissement du réfrigérant de sortie du premier échangeur de chaleur (2), sur la base d'une valeur de pression du côté de la haute pression détectée par le détecteur de pression du côté de la haute pression (41) et une valeur de pression du côté de la moyenne pression détectée par le détecteur de pression du côté de la moyenne pression (42), et commander le degré d'ouverture du premier détendeur (3a) de sorte que de degré de sous-refroidissement adopte une valeur cible, et commander le degré d'ouverture du second détendeur (3b) sur la base d'une différence de pression du réfrigérant passant par le premier détendeur (3a).

2. Dispositif à cycle de réfrigération selon la revendication 1, comprenant en outre :

un échangeur de chaleur de réfrigérant (20) configuré pour permettre l'échange de chaleur entre le réfrigérant à moyenne pression entre le premier détendeur (3a) et le second détendeur (3b), et un réfrigérant à basse pression entre le second détendeur (3b) et un côté d'aspiration du compresseur (1) ; et
un détecteur de pression du côté de la basse pression (43) configuré pour détecter une pression du réfrigérant à basse pression, dans lequel :

l'organe de commande (50) est configuré pour commander le degré d'ouverture du premier détendeur (3a) en utilisant la valeur de pression du côté de la haute pression, la valeur de pression du côté de la moyenne pression et une valeur de pression du côté de la basse pression détectée par le détecteur de pression du côté de la basse pression (43).

3. Dispositif à cycle de réfrigération selon la revendication 2, dans lequel :

l'organe de commande (50) est configuré pour calculer un degré de sous-refroidissement du réfrigérant de sortie du premier échangeur de chaleur (2) sur la base de la valeur de pression du côté de la haute pression, la valeur de pression du côté de la moyenne pression et la valeur de pression du côté de la basse pression, et commander le degré d'ouverture du premier détendeur (3a) de sorte que le degré de sous-refroidissement adopte une valeur cible.

4. Dispositif à cycle de réfrigération selon la revendication 2, dans lequel :

l'organe de commande (50) est configuré pour calculer la qualité de réfrigérant de sortie du premier échangeur de chaleur (2) sur la base de la valeur de pression du côté de la haute pression, la valeur de pression du côté de la moyenne pression et la valeur de pression du côté de la basse pression, et commander la degré d'ouverture du premier détendeur (3a) de sorte que la qualité adopte une valeur cible.

5. Dispositif à cycle de réfrigération selon l'une quelconque des revendications 1 à 4, dans lequel :

l'organe de commande (50) est configuré pour commander le second détendeur (3b) pour avoir un degré d'ouverture correspondant à la valeur de pression du côté de la moyenne pression à laquelle un coefficient de rendement (COP) est maximum.

FIG. 1

COOLING ←
HEATING ◄- · ·

FIG. 2

## FIG. 3

| step1 | OBTAIN INFORMATION OF EACH OF HIGH-PRESSURE SIDE PRESSURE Ph, MIDDLE-PRESSURE SIDE PRESSURE Pm, OPENING DEGREE OF UPSTREAM-SIDE EXPANSION VALVE |

$\downarrow$

| step2 | COMPUTE SATURATED LIQUID ENTHALPY Hm FROM MIDDLE-PRESSURE SIDE PRESSURE Pm |

$\downarrow$

| step3 | COMPUTE CONDENSER OUTLET TEMPERATURE Tco FROM HIGH-PRESSURE SIDE PRESSURE Ph AND SATURATED LIQUID ENTHALPY Hm |

$\downarrow$

| step4 | COMPUTE SATURATION TEMPERATURE CT OF CONDENSER FROM HIGH-PRESSURE SIDE PRESSURE Ph |

$\downarrow$

| step5 | COMPUTE CURRENT DEGREE OF SUPERCOOL SCco=CT-Tco |

$\downarrow$

| step6 | DETERMINE OPENING DEGREE OF UPSTREAM-SIDE EXPANSION VALVE FROM DEGREE OF SUPERCOOL SCco |

$\downarrow$

| step7 | OPERATE OPENING DEGREE OF U PSTREAM-SIDE EXPANSION VALVE |

## FIG. 4

OPEN UPSTREAM-SIDE
EXPANSION VALVE

———————————————————— SCco=TARGET SC*+H

NOT MOVE UPSTREAM-                        $H°C$
SIDE EXPANSION VALVE            ———— TARGET SC*
(DEAD ZONE)                               $H°C$

———————————————————— SCco=TARGET SC*-H

REDUCE OPENING DEGREE
OF UPSTREAM-SIDE EXPANSION
VALVE

## FIG. 5

INCREASE
OPENING
DEGREE OF UP-
STREAM-
SIDE                    REDUCE OPENING
EXPAN-                  DEGREE OF
SION                    UPSTREAM-SIDE
VALVE                   EXPANSION VALVE

## FIG. 6

COOLING

HEATING

FIG. 7

FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1647783 A2
- JP 2008064435 A